# EUROPÄISCHE PATENTANMELDUNG

(11) **EP 1 331 312 A1**
(43) Veröffentlichungstag der Anmeldung: **30.07.2003**
(21) Anmeldenummer: 02450285.8
(22) Anmeldetag: 18.12.2002
(51) Int. Cl.: E01B 29/46, B23K 11/00

(54) **Schweissaggregat**

(30) Priorität: 28.01.2002 AT 4702 U
(71) Anmelder: Franz Plasser Bahnbaumaschinen- Industriegesellschaft m.b.H., 1010 Wien (AT)
(72) Erfinder: Theurer, Josef, 1010 Wien (AT); Gruber, Leopold, 3270 Scheibbs (AT)

(57) **Zusammenfassung**

Ein Schweißaggregat (1) zur Durchführung von mobilen elektrischen Widerstandsschweißungen auf einem Gleis besteht aus einer Steuereinheit (7) und zwei durch Stauchzylinder (9) in Schienenlängsrichtung bewegbaren Aggregathälften (5,6), die jeweils ein durch einen Klemmzylinder (13) in einer Schwenkbewegung (12) zueinander bewegbares Paar von Klemmbacken (10) aufweisen. Die Klemmbacken sind mit Hilfe des Klemmzylinders (13) von einer zur Hindurchführung eines Schienenkopfes (15) geeigneten Aufsetzposition in eine Schweißposition (16) zueinander bewegbar, bei der die Klemmbacken (10) an Schienenstegen (17) beider zu verschweißender Schienen (2) zur Durchführung der Schweißung anliegen. Eine Tasteinrichtung (18) ist zur Erfassung der durch das Ende der Schwenkbewegung (12) und Anlage der Klemmbacken (10) an die Schienenstege (17) definierten korrekten Schweißposition (16) der Klemmbacken (10) vorgesehen und zur Abgabe eines für die weitere Durchführung des Schweißvorganges erforderlichen Steuersignales ausgebildet.

## Beschreibung

Die Erfindung betrifft ein Schweißaggregat zur Durchführung von mobilen elektrischen Widerstandsschweißungen auf einem Gleis, bestehend aus einer Steuereinheit und zwei durch Stauchzylinder in Schienenlängsrichtung bewegbaren Aggregathälften, die jeweils ein durch Klemmzylinder in einer Schwenkbewegung zueinander bewegbares Paar von Klemmbacken aufweisen, die mit Hilfe der Klemmzylinder von einer zur Hindurchführung eines Schienenkopfes geeigneten Aufsetzposition in eine Schweißposition zueinander bewegbar sind, bei der die Klemmbacken an Schienenstegen beider Schienen zur Durchführung der Schweißung anliegen.

Derartige Schweißaggregate zum sogenannten mobilen Abbrennstumpfschweißen sind bereits aus einer Vielzahl von Veröffentlichungen in verschiedenen Ausführungen bekanntgeworden, wie beispielsweise durch US 3,349,216, EP 0 132 227 B1 oder GB 2 185 703 A.

In EP 0 253 634 A2 wird die Verwendung von in die Klemmeinheit bzw. Klemmbacken eines Schweißaggregates eingebauten Sensoren beschrieben, anhand derer festgestellt wird, ob die zu verschweißenden Schienenenden horizontal und vertikal genau aufeinander ausgerichtet sind, wobei die Korrektur einer eventuellen Abweichung durch Signale automatisch eingeleitet werden kann.

Die Aufgabe der vorliegenden Erfindung liegt nun in der Schaffung eines Schweißaggregates der gattungsgemäßen Art, mit der der Schweißvorgang mit größerer Sicherheit und Zuverlässigkeit durchführbar ist.

Erfindungsgemäß wird diese Aufgabe mit einem Schweißaggregat der eingangs genannten Art dadurch gelöst, daß eine Tasteinrichtung zur Erfassung der durch das Ende der Schwenkbewegung und Anlage der Klemmbacken an die Schienenstege definierten korrekten Schweißposition der Klemmbacken vorgesehen und zur Abgabe eines für die weitere Durchführung des Schweißvorganges erforderlichen Steuersignales ausgebildet ist.

Durch die Anordnung einer derartigen Tasteinrichtung ist es nun möglich, auf einfache und zuverlässige Weise zu überprüfen, ob die Klemmbacken wirklich fest und absolut formschlüssig an den Schienenstegen anliegen, bevor anhand der Stauchzylinder die relativ großen Zug- bzw. Stauchkräfte auf die Schienen übertragen werden. Durch das Aufbringen bzw. Beobachten des Klemmdruckes allein ist dieser sichere Sitz noch nicht garantiert, da dieser Druck ja auch dann vorhanden ist, wenn sich zwischen Klemmbacke und Schienensteg z.B. ein metallenes Hindernis befindet. Mit der Abhängigkeit von einem die exakte Anlage der Klemmbacken garantierenden Steuersignal wird eine - aus einer Schräglage der Backen in bezug auf die Schienen resultierende - Beschädigung des Schweißkopfes zuverlässig ausgeschlossen.

Weitere Vorteile und Ausbildungen der Erfindung ergeben sich aus den Unteransprüchen und der Zeichnung.

Im folgenden wird die Erfindung anhand von in der Zeichnung dargestellten Ausführungsbeispielen näher beschrieben.

Es zeigen:
Fig. 1 eine vereinfachte Seitenansicht eines erfindungsgemäß ausgebildeten Schweißaggregates,
Fig. 2 und 3 je eine Ansicht des Aggregates in Schienenlängsrichtung in verschiedenen Positionen, und
Fig. 4 eine Detailansicht im Bereich der Klemmbacken einer anderen Ausführungsform der Erfindung.

Bei den verschiedenen Figuren bzw. Ausführungsformen werden der Einfachheit halber für funktionsgleiche Elemente dieselben Bezugszeichen verwendet.

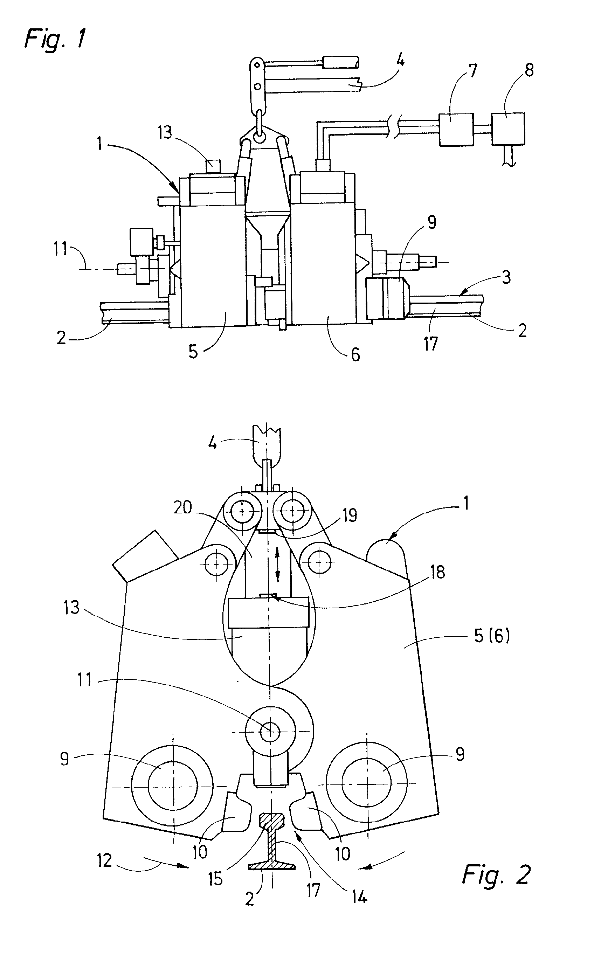

In Fig. 1 ist ein mobiles Schweißaggregat 1 zu sehen, das zur Durchführung von elektrischen Widerstandsschweißungen von hintereinander verlegten Schienen 2 eines Gleises 3 ausgebildet ist. Das Schweißaggregat 1 ist über einen Auslegerkran 4 auf einem gleisverfahrbaren (nicht dargestellten) Fahrzeug höhen- und seitenverstellbar gelagert und besteht aus zwei Aggregathälften 5,6 sowie einer auf dem Fahrzeug angeordneten Steuereinheit 7. Diese steht weiters mit einem Generator 8 zur Stromversorgung des Aggregates in Verbindung. Die beiden Aggregathälften 5 und 6 sind in Schienenlängsrichtung voneinander distanziert und anhand von in Schienenlängsrichtung verlaufenden, hydraulischen Stauchzylindern 9 miteinander verbunden sowie relativ zueinander verstellbar.

Wie in Fig. 2 ersichtlich, weist jede Aggregathälfte 5,6 jeweils ein Paar von Klemmbacken 10 auf, die auf einer in Schienenlängsrichtung verlaufenden Achse 11 drehbar gelagert und in einer Schwenkbewegung 12 zueinander bewegbar ausgebildet sowie mit einem hydraulischen Klemmzylinder 13 verbunden sind. Mit Hilfe dieses Klemmzylinders 13 sind die Klemmbacken 10 eines jeden Paares von einer (hier dargestellten) Aufsetzposition 14, in der ein Schienenkopf 15 der Schiene 2 zwischen den Klemmbacken 10 hindurchgeführt werden kann, in eine Schweißposition 16 verstellbar, in der die Klemmbacken 10 an Schienenstegen 17 der beiden miteinander zu verschweißenden Schienen 2 zur Durchführung der Schweißung anliegen.

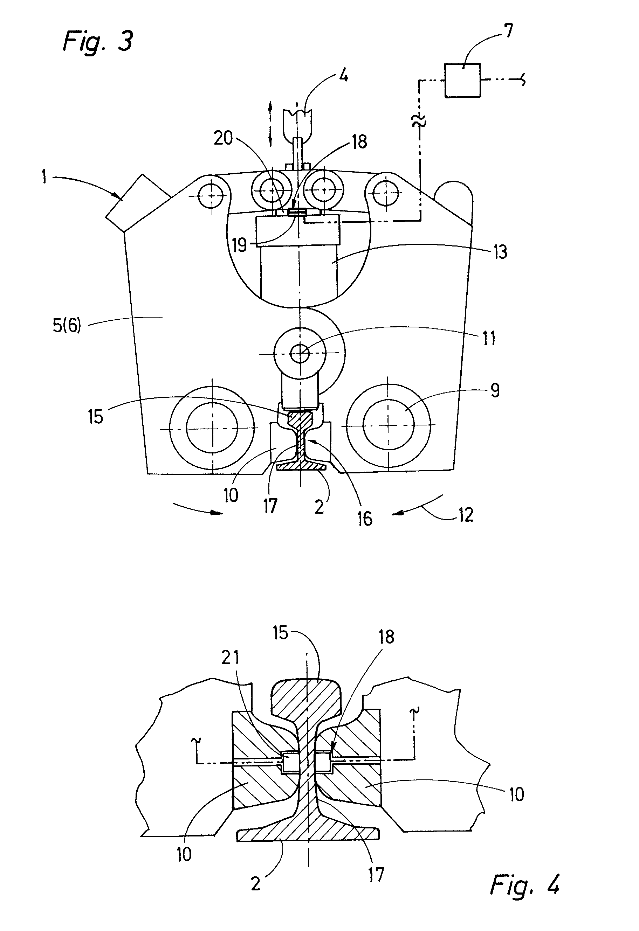

Fig. 3 zeigt das Schweißaggregat 1 in der durch das Ende der Schwenkbewegung 12 der Klemmbacken 10 definierten Schweißposition 16. Zur Erfassung dieser korrekten Position der Klemmbacken 10 ist eine Tasteinrichtung 18 vorgesehen, die in der hier dargestellten Ausführungsvariante als Endschalter 19 ausgeführt ist, der mit dem Klemmzylinder 13 verbunden ist. Der Endschalter 19 ist so eingestellt, daß er erst dann ein Steuersignal abgibt, wenn der Kolben 20 des Klemmzylinders 13 zur Gänze bis zu jener Stellung in den Zylinder eingefahren wurde, welche der an den Schienensteg 17 formschlüssig anliegenden Stellung der Klemmbacken 10 entspricht. Erst nach Abgabe des Steuersignals an die Steuereinheit 7 wird die Schweißprozedur in bekannter Weise ungehindert fortgesetzt, indem die beiden Aggregathälften 5 und 6 mitsamt den Schienenenden zueinander bewegt werden.

Damit ist die Gefahr einer Beschädigung des Schweißaggregates 1 zuverlässig ausgeschlossen. Dies könnte insbesondere dann zutreffen, wenn trotz einer Schräglage des Schweißaggregates 1 die sehr hohen Zugkräfte für ein Zueinanderbewegen der Schienenenden aufgebracht werden. In der praktischen Durchführung ist es beispielsweise zweckmäßig, vorerst im Hydrauliksystem einen niederen Druck von 80 bar anzuwenden, der sicherheitshalber erst mit der Abgabe des Steuersignals auf den endgültigen Betriebsdruck von 120 bar erhöht wird.

In Fig. 4 ist eine andere Variante einer Tasteinrichtung 18 zu sehen, die die Form von in die Klemmbacken 10 integrierten Tastern 21 aufweist. Diese Taster 21 sind dazu ausgebildet bzw. kalibriert, die Position der Klemmbacken 10 relativ zum Schienensteg 17 zu erfassen und bei Erreichen der korrekten Klemmposition ein Steuersignal abzugeben, das den Beginn des Schweißvorganges signalisiert.

Eine Vielzahl von weiteren Ausbildungsformen der Tasteinrichtung 18 ist im Rahmen der Erfindung möglich. So kann z.B. als Tasteinrichtung ein induktiver Wegaufnehmer vorgesehen sein, der die Bewegung der Schweißbacken 10 zueinander oder relativ zu einem Bezugspunkt erfasst und daraus auf deren Stellung in Bezug auf den Schienensteg 17 schließen kann, um bei Erreichen der korrekten Position ein Steuersignal abzugeben. Der Abstand der Schweißbacken 10 vom Schienensteg 17 könnte auch mittels einer Tasteinrichtung in Form eines berührungslosen Distanzmessers erfasst werden. Ebenso wäre eine als Lichtschranke ausgebildete Tasteinrichtung vorstellbar, bei der - bei korrekter Positionierung der Schweißbacken 10 - ein Lichtstrahl unterbrochen und dadurch ein Steuersignal zum Beginn des Schweißvorganges ausgelöst wird.

## Patentansprüche

1. Schweißaggregat (1) zur Durchführung von mobilen elektrischen Widerstandsschweißungen auf einem Gleis (3), bestehend aus einer Steuereinheit (7) und zwei durch Stauchzylinder (9) in Schienenlängsrichtung bewegbaren Aggregathälften (5,6), die jeweils ein durch Klemmzylinder (13) in einer Schwenkbewegung (12) zueinander bewegbares Paar von Klemmbacken (10) aufweisen, die mit Hilfe der Klemmzylinder (13) von einer zur Hindurchführung eines Schienenkopfes (15) geeigneten Aufsetzposition (14) in eine Schweißposition (16) zueinander bewegbar sind, bei der die Klemmbacken (10) an Schienenstegen (17) beider Schienen (2) zur Durchführung der Schweißung anliegen, **dadurch gekennzeichnet, daß** eine Tasteinrichtung (18) zur Erfassung der durch das Ende der Schwenkbewegung (12) und Anlage der Klemmbacken (10) an die Schienenstege (17) definierten korrekten Schweißposition (16) der Klemmbacken (10) vorgesehen und zur Abgabe eines für die weitere Durchführung des Schweißvorganges erforderlichen Steuersignales ausgebildet ist.

2. Schweißaggregat nach Anspruch 1, **dadurch gekennzeichnet, daß** die Tasteinrichtung (18) als Endschalter (19) zum Erfassen einer nach Erreichen der Schweißposition (12) vorhandenen Endstellung des Klemmzylinders (13) ausgebildet ist.

3. Schweißaggregat nach Anspruch 1, **dadurch gekennzeichnet, daß** die Tasteinrichtung (18) als in die Schweißbacke (10) integrierter Taster (21) ausgebildet ist.

4. Schweißaggregat nach Anspruch 1, **dadurch gekennzeichnet, daß** die Tasteinrichtung (18) als berührungsloser Distanzmesser ausgebildet ist.

5. Schweißaggregat nach Anspruch 1, **dadurch gekennzeichnet, daß** die Tasteinrichtung (18) als induktiver Wegaufnehmer ausgebildet ist.

6. Schweißaggregat nach Anspruch 1, **dadurch gekennzeichnet, daß** die Tasteinrichtung (18) als Lichtschranke ausgebildet ist, die bei Unterbrechung eines Lichtstrahles das Steuersignal abgibt.
